# FASCICULE DE BREVET EUROPEEN

(11) **EP 3 237 549 B1**
(45) Date de publication et mention de la délivrance du brevet: **11.06.2025**
(21) Numéro de dépôt: 15828352.3
(22) Date de dépôt: 22.12.2015
(51) Int. Cl.: C09D 1/04, C09D 5/02, C03C 25/42, C08L 83/04, C09D 7/65, C03C 25/465, D06N 5/00, D06N 7/00, B44D 3/18

(54) **COMPOSITION AQUEUSE DE LIANT POUR FIBRES ET PRODUITS FIBREUX OBTENUS**
WÄSSRIGE ZUSAMMENSETZUNG FÜR BINDEMITTEL FÜR FASER UND ERHALTENES FASERIGES PRODUCT
AQUEOUS COMPOSITION OF BINDER FOR FIBRES AND FIBROUS PRODUCT OBTAINED

(30) Priorité: 22.12.2014 FR 1463064
(43) Date de publication de la demande: 01.11.2017
(73) Titulaire: Saint-Gobain Adfors, 92400 Courbevoie (FR)
(72) Inventeur: GARCIA, Alexandre, 0175 Oslo (NO); GARNIER, Louis, 75012 Paris (FR)
(74) Mandataire: Saint-Gobain Recherche
(86) Numéro de dépôt international: PCT/FR2015/053701
(87) Numéro de publication internationale: WO 2016/102875

(56) Documents cités:
- WO-A1-2007/086574
- WO-A2-2009/093002
- WO-A2-2010/070248
- CH-A2- 703 166
- DE-A1- 102007 007 318
- JP-A- 2008 239 856

## Description

La présente invention se rapporte à des compositions aqueuses de liant pour des fibres et aux produits fibreux ainsi obtenus.

L'invention concerne plus particulièrement une composition aqueuse de liant inorganique ou hybride pour la fabrication de produits sous forme de mats ou de tissus comprenant des fibres minérales, notamment de verre ou de roche. Les mats sont utilisés notamment pour réaliser des membranes bitumées et en tant qu'élément de surface pour des produits d'isolation acoustique et/ou thermique à base de laine minérale. Les tissus sont destinés à former des revêtements muraux, notamment des toiles à peindre.

Les mats de fibres minérales (aussi appelés « intissés » ou « voiles ») peuvent être fabriqués selon les procédés connus opérant par voie sèche ou par voie humide.

Dans le procédé par voie sèche, de la matière minérale fondue contenue dans un four est acheminée vers un ensemble de filières à partir desquelles des filaments s'écoulent par gravité et sont étirés par un fluide gazeux. Les filaments minéraux sont récoltés sur un convoyeur où ils s'entremêlent en formant un mat.

Sur la face supérieure du mat ainsi formé, on applique un liant organique à l'aide d'un dispositif adapté, le plus souvent opérant par dépôt par rideau, et on élimine l'excès de liant organique par aspiration au niveau de la face opposée. Le mat entre ensuite dans un dispositif contenant de l'air chaud dont la température, de l'ordre de 200 à 250°C, est adaptée pour éliminer l'eau et réticuler le liant organique en un temps très court, de l'ordre d'une dizaine de secondes à 1 minute, puis le mat de fibres minérales est collecté sous la forme d'un enroulement.

Dans le procédé par voie humide, le mat est obtenu à partir d'une dispersion aqueuse de fibres minérales coupées qui est déposée au moyen d'une tête de formage sur un convoyeur muni de perforations et l'eau est extraite à travers le convoyeur grâce à un caisson d'aspiration. Les fibres minérales coupées restant sur le convoyeur forment un mat qui est traité dans les mêmes conditions thermiques que celles décrites pour le procédé par voie sèche.

Dans les procédés précités, le liant organique a pour fonction de lier les fibres minérales entre-elles et de conférer au mat qui les contient des propriétés mécaniques adaptées à l'usage désiré, notamment une rigidité suffisante pour lui permettre d'être manipulé facilement sans risque de déchirure.

Le liant organique appliqué sur les fibres minérales se présente généralement sous la forme d'une solution aqueuse renfermant au moins une résine thermodurcissable et des additifs tels qu'un catalyseur de réticulation de la résine, un silane (agent de couplage), un hydrofugeant, ... Les résines thermodurcissables les plus couramment utilisées sont des résines urée-formaldéhyde, mélamine-formaldéhyde et phénol-formaldéhyde qui présentent l'avantage de lier efficacement les fibres tout en étant peu coûteuses. Toutefois, ces résines sont susceptibles d'émettre du formaldéhyde lors de la fabrication du mat de fibres (pendant le traitement thermique) mais aussi après leur mise en place finale. Parce que les effets nocifs du formaldéhyde sont avérés, la réglementation en la matière se durcit et oblige les industriels à proposer des compositions alternatives exemptes de formaldéhyde.

Du fait de leur nature organique, les liants précités peuvent se consumer au contact d'une flamme et par conséquent la résistance au feu d'un mat de fibres contenant ces liants est faible. L'ajout d'agents ignifugeants dans le liant a déjà été proposé afin d'améliorer la résistance au feu du mat. De tels agents ignifugeants sont notamment des composés halogénés et des oxydes métalliques. Toutefois, les composés halogénés génèrent des émissions de composés organiques volatils dont certains peuvent être toxiques, et les oxydes métalliques dégradent les performances mécaniques des liants qui les contiennent. Ces agents ignifugeants sont par ailleurs relativement coûteux.

On connaît des compositions hybrides associant des composés organiques et inorganiques présentant une bonne résistance au feu.

US 2012/0277381 divulgue une résine polyester hybride applicable sur des textiles synthétiques, tel qu'un tissu de polyester. La résine est obtenue par réaction d'une résine polyester, de particules de silice et d'un alcoxysilane.

Dans DE 10 2007007318, il est décrit une composition de revêtement pour des textiles ayant un effet biologique direct ou indirect sur les organismes. La composition comprend a) un sol d'un agent filmogène sous forme de nanoparticules formé par hydrolyse ou co-hydrolyse de silice et/ou de composés métalliques et b) un composé bioactif tel qu'une huile, une substance naturelle sous forme d'un liquide épais ou solide dans l'eau ou un solvant organique miscible avec l'eau.

WO 2011/128526 divulgue un liant hydraulique pour agglomérer ou consolider des particules solides de toute forme, y compris des fibres. Le liant comprend un silicate alcalin en solution aqueuse, un tensio-actif et un triglycéride naturel.

La présente invention a pour but de fournir une solution alternative aux compositions de liant classiques pour fibres, en particulier minérales, à base de résines thermodurcissables contenant du formaldéhyde qui permet de conférer une meilleure résistance au feu au produit fibreux obtenu, tout en conservant de bonnes propriétés mécaniques, notamment une rigidité et une résistance à la rupture en traction acceptables.

Ce but est atteint grâce à une composition aqueuse de liant inorganique ou hybride qui comprend (en % des matières solides)
- 55 à 100 % en poids d'au moins un silicate de métal alcalin présentant un rapport massique Si/métal alcalin qui varie de 0,3 à 2,
- 0 à 35 % en poids d'au moins un agent plastifiant, et
- 0 à 10 % en poids d'un ou plusieurs additifs.

Dans la présente invention, on entend par « composition aqueuse de liant inorganique » une composition contenant essentiellement un silicate de métal alcalin et de l'eau. De la même manière, une « composition aqueuse de liant hybride » est une composition contenant le silicate de métal alcalin, l'agent plastifiant, ou le produit de réaction de ces deux composés, et de l'eau.

Le silicate de métal alcalin conforme à l'invention fait partie des silicates dits « solubles » qui n'ont pas de formule chimique et de poids moléculaire spécifiques mais sont considérés comme des « verres » résultant de la combinaison d'oxyde de métal alcalin et de silice dans des proportions variables. La formule générale des silicates solubles est M₂O • x SiO₂ dans laquelle M représente Na ou K, et x est le rapport molaire (MR) définissant le nombre de mole de silice (SiO₂) par mole d'oxyde de métal alcalin (M₂O). Dans le domaine de l'invention, on utilise le rapport massique (WR) SiO₂ : M₂O qui est défini par les relations suivantes :
- pour les silicates de sodium : WR = MR/1,032,
- pour les silicates de potassium : WR = MR/1,566, et

Dans la présente invention, on désigne le rapport massique (WR) SiO₂ : M₂O par « rapport massique Si/métal alcalin ».

Le silicate alcalin conforme à l'invention est de préférence choisi parmi les silicates de potassium ou de sodium, et avantageusement de potassium.

Il a été constaté que le rapport massique Si/métal alcalin a une incidence directe sur la rigidité du produit fibreux : plus ledit rapport est élevé et plus la rigidité est importante. De manière générale, le rapport massique Si/métal alcalin varie de 0,3 à 2,0, de préférence est supérieur à 0,5, et mieux encore varie de 1,2 à 1,6.

Lorsque le silicate est un silicate de sodium, le rapport massique Si/Na varie de préférence de 1,0 à 2,0 et avantageusement de 1,5 à 2,0.

Lorsque le silicate est un silicate de potassium, le rapport massique Si/K varie de préférence de 1,0 à 1,6 et avantageusement de 1,3 à 1,5.

Le rapport massique Si/métal alcalin peut être ajusté précisément en utilisant un mélange de plusieurs silicates de métal alcalin de rapports massiques Si/métal alcalin différents.

Le silicate alcalin est généralement sous la forme d'une solution aqueuse présentant un pH qui varie de 9 à 13, de préférence 10 à 12.

L'agent plastifiant a pour fonction de s'insérer dans le réseau de silice formé à partir du silicate alcalin et de diminuer sa rigidité donnant ainsi un liant plus flexible.

L'agent plastifiant est de préférence choisi dans le groupe constitué par les copolymères de styrène et de butadiène, les homopolymères et les copolymères de (met)acrylate d'alkyle, notamment le poly(acrylate de butyle), les copolymères de (meth)acrylate d'alkyle et de styrène, les copolymères d'acide (meth)acrylique et de styrène, les poly(acétate de vinyle), les silicones tels que les poly(diméthylsiloxane) et les siliconates, notamment les siliconates de potassium, en particulier le méthylsiliconate de potassium.

L'agent plastifiant présente généralement une température de transition vitreuse (Tg) inférieure à 0°C. Il doit être soluble dans la solution aqueuse de silicate alcalin et être stable au pH de ce dernier.

Comme indiqué précédemment la quantité d'agent plastifiant dans la composition de liant représente au plus 35 % en poids des matières solides. Au-delà de cette valeur, on observe une diminution des propriétés mécaniques du produit fibreux, notamment de la rigidité (le produit est trop flexible et ne peut pas être manipulé convenablement) et une diminution de la résistance au feu. De préférence, la quantité d'agent plastifiant est au plus égale à 25 % en poids des matières solides.

Lorsque la composition de liant contient un poly(diméthylsiloxane), ce dernier est présent à raison d'au plus 2 % en poids des matières solides afin de ne pas trop réduire la rigidité du produit fibreux. De préférence, la quantité est au plus égale à 1 %.

La composition de liant conforme à l'invention peut encore comprendre jusqu'à 10 % en poids des matières solides d'un ou plusieurs additifs conventionnels, par exemple un agent de couplage entre le silicate de métal alcalin et l'agent plastifiant, un agent anti-mousse, un pigment, une charge minérale, un agent dispersant, notamment pour la charge minérale, un épaississant et un biocide.

Un agent de couplage particulièrement intéressant, notamment pour coupler le silicate de métal alcalin et un copolymère de styrène et de butadiène, est le tétrasulfure de bis(3-triethoxysilylpropyle).

La composition de liant se présente généralement sous la forme d'une solution ou d'une dispersion aqueuse.

Le liant inorganique ou hybride peut être appliqué sur des fibres pour former des produits fibreux, lesquels produits constituent un autre objet de la présente invention.

Les fibres peuvent être de toute nature, par exemple des fibres minérales constituées de verre ou d'une roche, en particulier le basalte; des fibres organiques telles que des fibres synthétiques, notamment des fibres de polyester et de polyoléfine telle que le polypropylène; et des fibres naturelles telles que les fibres cellulosiques, notamment des fibres de coton, lin, sisal et chanvre, et des fibres animales telles que la laine et la soie. Les fibres peuvent être un mélange de plusieurs fibres de nature différente. De manière préférée, les fibres sont des fibres minérales, en particulier des fibres de verre.

Les fibres peuvent être des fibres de longueur variable selon leur nature chimique. Notamment, les fibres peuvent être continues ou coupées.

Le produit fibreux peut être sous la forme d'un mat de fibres minérales.

De manière classique, pour préparer des mats de fibres minérales on dépose le liant inorganique ou hybride sur le mat de fibres minérales (formé par la voie sèche ou la voie humide), puis le mat est traité à une température permettant la formation d'un liant infusible. Le traitement se fait à une température qui varie généralement de 180 à 250°C, de préférence de 200 à 220°C, et pendant une durée très courte, de l'ordre de quelques secondes à quelques minutes.

La longueur des fibres minérales est au plus égale à 150 mm, de préférence varie de 20 et 100 mm et avantageusement de 50 à 70 mm. Leur diamètre peut varier dans une large mesure, par exemple de 5 à 30 µm.

Les fibres minérales sont aussi bien des filaments que des fils composés d'une multitude de filaments liés ensemble, notamment par un ensimage (fils de base). Les fibres minérales peuvent encore être des assemblages des fils de base précités sous la forme de stratifils (« rovings » en anglais). Les fils de base et les stratifils peuvent être des fils sans torsion ou des fils retordus (ou fils textiles), de préférence sans torsion.

La masse linéique des fibres minérales constituées des fils précités peut aller de 34 à 1500 tex.

Le verre entrant dans la constitution des filaments peut être de tout type, par exemple C, E, R, AR (alcali-résistant). On préfère le verre C et le verre E.

Le mat de fibres peut, le cas échéant, être renforcé par des fibres continues qui sont généralement déposées sur le dispositif de convoyage du mat dans le sens d'avancement du mat et réparties sur tout ou partie de la largeur du mat. Ces fibres sont généralement déposées dans l'épaisseur du mat de fibres, notamment minérales, avant l'application du liant inorganique ou hybride.

Les fibres de renforcement sont généralement en verre.

Le mat de fibres selon l'invention présente généralement une masse surfacique qui varie de 10 à 1100 g/m², de préférence de 30 à 350 g/m², et avantageusement de 35 à 80 g/m².

Le mat de fibres, notamment minérales, conforme à l'invention renferme généralement 5 à 50 % en poids de liant inorganique ou hybride, de préférence 10 à 45 %.

Le mat de fibres minérales obtenu conformément à la présente invention peut être utilisé notamment pour fabriquer des éléments de toiture, par exemple des membranes bitumées ou des bardeaux.

Ledit mat peut notamment être combiné à un autre matériau, différent dudit mat, pour former un complexe laminé qui présente de bonnes propriétés mécaniques en termes de résistance à la rupture, stabilité dimensionnelle, résistance à la délamination et flexibilité.

Dans ce cas, le mat de fibres minérales est associé à une structure de fils de verre tissés, par exemple un tissu, une grille ou un tricot, au moyen d'un liant organique, notamment à base d'une résine urée-formaldéhyde, ou inorganique, et l'association est liée par laminage. Les tissus et les grilles de fils de verre sont préférés.

En général, l'application du liant est effectuée en faisant passer le mat et/ou la structure de fils de verre tissés dans un bain contenant le liant organique ou inorganique,
De préférence, le mat entrant dans la constitution du complexe a une masse surfacique qui varie de 10 à 120 g/m², avantageusement de 30 à 70 g/m².

La masse surfacique du complexe laminé obtenu varie de 30 à 250 g/m² et de préférence de 80 à 180 g/m².

Le liant représente 5 à 50 % du poids du complexe final et de préférence 10 à 30 %.

Du bitume peut ensuite être appliqué sur tout ou partie d'au moins une des faces du complexe obtenu afin d'obtenir une membrane bitumée pour toiture.

Le mat de fibres minérales conforme à la présente invention peut encore être utilisé en tant qu'élément de surfaçage de produits d'isolation thermique et/ou acoustique à base de laine minérale, ou de plaques de mousse ou de plâtre.

A cet effet, le mat de fibres de verre ou le complexe laminé décrit dans les paragraphes précédents est enduit d'une composition ayant la consistance d'une pâte aqueuse qui comprend 10 à 90 % en poids d'au moins un silicate de sodium ou de potassium et 10 à 90 % en poids d'une charge minérale, de préférence du carbonate de calcium.

La composition d'enduction peut comprendre en outre jusqu'à 50 % en poids d'un latex d'un copolymère de styrène et de butadiène ou d'acide (méth)acrylique, ou d'un homopolymère d'acétate de vinyle ou d'acide (méth)acrylique, et jusqu'à 10 % en poids d'additifs conventionnels tels qu'un épaississant, un agent hydrophobant, un agent mouillant et des pigments.

De préférence, l'application de la composition d'enduction sur le mat ou le complexe précité est effectuée par enduction au moyen d'un couteau, et elle est suivie d'une étape de séchage, par exemple une température de 160 à 190°C pendant une durée variant de 30 secondes à 5 minutes.

La masse surfacique du mat de fibres de verre et du complexe laminé avant l'application de la composition d'enduction est identique à celle précédemment décrite pour la fabrication des éléments de toiture.

La composition d'enduction est appliquée sur le mat de fibres de verre ou le complexe laminé à raison de 50 à 400 g/m², et de préférence 200 à 300 g/m².

La composition de liant conforme à l'invention peut aussi être appliquée sur des grilles, des tissus ou des tricots constitués pour tout ou partie de fils minéraux, notamment de verre. Sont particulièrement visés des tissus destinés à former des revêtements muraux, en particulier sous la forme d'une toile à peindre comprenant des fils de verre constitués d'une pluralité de filaments de verre revêtus d'une composition d'ensimage organique. L'application de la composition de liant sur la toile à peindre permet de former une couche de revêtement qui adhère à l'ensimage organique et présente une bonne résistance au feu.

Les toiles à peindre sont de préférence constitués de fils de verre présentant une masse linéique qui varie de 50 à 500 tex, avantageusement de 100 à 350 tex, et présentent une masse surfacique qui varie de 30 à 1000 g/m², de préférence 50 à 300 g/m² et avantageusement de 75 à 200 g/m².

La quantité de liant conforme à la présente invention appliqué sur la toile à peindre représente 5 à 50 % du poids total de la toile à peindre, de préférence 10 à 45 %.

Les exemples qui suivent permettent d'illustrer l'invention sans toutefois la limiter.

Dans ces exemples, on soumet le produit fibreux aux tests suivants :
- la résistance à la rupture en traction du produit fibreux, exprimée en N, est mesurée dans les conditions de la norme NF EN ISO 13934-1. La mesure est effectuée sur 10 échantillons de 25 cm de long et 5 cm de large, et
- la rigidité du produit fibreux est mesurée au moyen d'un appareil Lorentzen & Wettre, à 23°C et 50 % d'humidité relative sur un échantillon rectangulaire (3,8 cm x 8,0 cm). Lorsqu'il s'agit de toile à peindre, l'échantillon est découpé dans le sens machine (par rapport au sens de tissage).

L'échantillon est maintenu verticalement à une extrémité dans la plus petite dimension entre deux mors et une force horizontale est appliquée sur l'extrémité libre (longueur utile : 5,0 cm). On mesure la force appliquée (en mN) pour atteindre un angle de flexion égal à 30°. Cette force caractérise la rigidité du produit fibreux.
- la résistance au feu est mesurée dans les conditions de la norme NF EN ISO 11925-2. On détermine le temps de propagation (en secondes) sur une distance de 15 cm et la distance de propagation (en mm), pour une flamme appliquée en surface ou sur la tranche de l'échantillon.

### EXEMPLES 1 A 6

Ces exemples illustrent la fabrication de mats de fibres de verre.

On mélange du silicate de potassium en solution aqueuse, un latex de résine styrène-butadiène et éventuellement un polydiméthylsiloxane dans les proportions figurant dans le tableau 1, exprimées en % en poids des matières solides. On ajuste le pH du mélange à 11 avec de la soude. De l'eau est ajoutée au mélange de manière à obtenir un taux de matières solides égal à 15 % .

On imprègne un mat de fibres de verre C (Grade GF/C Glass Microfiber Filter Binder Free commercialisé par la société Watman) par immersion dans la composition aqueuse de liant précitée. Après avoir éliminé l'excès de liant, on place le mat dans une étuve à 200 °C pendant 3 minutes.

Les propriétés des mats obtenus sont données dans le tableau 1 par comparaison avec un mat traité avec une résine mélamine-formaldéhyde (Référence) dans les mêmes conditions, sauf que la durée du traitement dans l'étuve est égale à 5 minutes.

Les exemples 1 et 3 présentent une bonne résistance à la rupture en traction combinée à une rigidité plus élevée que celle de la Référence. L'ajout d'agent plastifiant permet de diminuer la rigidité du mat (exemples 2 et 4 à comparer aux exemples 1 et 3) sans dégrader la résistance à la rupture en traction (exemple 4).

L'exemple 4 représente un bon compromis entre la résistance à la rupture en traction et la rigidité du mat, proche des performances de la Référence.

La présence de polydiméthylsiloxane dans l'exemple 5 permet de réduire de la rigidité du mat de 74,7 % par rapport à l'exemple 4, tout en conservant une résistance à la rupture en traction acceptable.

La rigidité du mat des exemples 1, 3 et 6 décroit lorsque le rapport Si/P diminue. Le choix du rapport Si/P permet de contrôler les propriétés du mat aussi bien sa résistance à la rupture en traction que sa rigidité.

### EXEMPLES 7 A 14

On fabrique un mat dans les conditions des exemples 1 à 6 modifiées en ce que la composition de liant a la composition donnée dans le tableau 2.

On soumet les mats des exemples 7, 8, 10 à 12 et 14, ainsi que le mat de Référence au test de résistance au feu. Les résultats figurent dans le tableau 2.

Les exemples 7 à 10 et 14 selon l'invention présentent une résistance à la rupture en traction proche de la Référence à taux de liant équivalent. Les performances au feu des mats selon ces exemples sont meilleures que la Référence, que ce soit en termes de distance propagation ou de temps de propagation à 15 cm.

### EXEMPLES 15 A 17

Ces exemples illustrent la fabrication de toiles à peindre.

On prépare la composition de liant par mélange des composés figurant dans le tableau 3, dans des proportions exprimées en % en poids des matières solides. La teneur en matières solides dans la composition aqueuse de liant est égale à 13 %.

On imprègne une toile à peindre constituée de fils de verre tissés par immersion dans la composition de liant précitée. La toile à peindre est un tissu à armure satin constituée de 4,5 fils voluminisés de 330 tex par cm, en trame, et 7,9 fils de 68 tex par cm, en chaîne. La masse surfacique de la toile est égale à 200 g/m.

Après avoir éliminé l'excès de liant, on place la toile à peindre imprégnée dans une étuve à 200°C pendant 90 secondes.

La quantité de liant représente 20 % du poids de la toile à peindre obtenue.

Les propriétés des toiles à peindre obtenues figurent dans le tableau 3 par comparaison avec une toile à peindre traitée dans les mêmes conditions avec une résine mélamine-formaldéhyde (Référence).

Les mesures de résistance au feu pour les exemples 15, 16 et la Référence sont données dans le tableau 3.

Les exemples 15 et 16 présentent une rigidité comparable à celle de la Référence. L'ajout d'un agent de couplage (exemple 17) permet d'obtenir une résistance à la rupture en traction et une rigidité plus élevées que celle de la Référence.

Les propriétés de résistance au feu des exemples 15 et 16 sont très supérieures à celles de la Référence.

**Tableau 1**

| Exemple | 1 | 2 | 3 | 4 | 5 | 6 | Réf. |
|---|---|---|---|---|---|---|---|
| - Silicate de potassium⁽¹⁾ | 100 | 75 | - | - | - | - | - |
| - Silicate de potassium⁽²⁾ | - | - | 100 | 75 | 73 | - | - |
| - Silicate de potassium⁽³⁾ | - | - | - | - | - | 100 | - |
| - Copolymère styrène-butadiène⁽⁴⁾ | - | 25 | - | 25 | 25 | - | - |
| - Polydiméthylsiloxane⁽⁵⁾ | - | - | - | - | 2 | - | - |
| Taux de liant (% en poids) | 47,2 | 47,0 | 43,1 | 47,6 | 43,8 | 45,0 | 45,0 |
| Résistance rupture en traction (N) | 86,7 | n.d. | 90,0 | 96,5 | 68,1 | 33,3 | 109,0 |
| Rigidité (mN) | 98,9 | 53,2 | 89,3 | 60,0 | 15,2 | 33,0 | 65,4 |

| | | | | | | | |
|---|---|---|---|---|---|---|---|
| ⁽¹⁾ Référence Betol^{®} K42T commercialisé par la société Woellner (rapport massique Si/P = 1,9 ; P signifiant potassium), ⁽²⁾ Référence Betol^{®} K5020T commercialisé par la société Woellner (rapport massique Si/P = 1,6 ; P signifiant potassium) ⁽³⁾ Référence Betol^{®} K57M commercialisé par la société Woellner (rapport massique Si/P = 0,6 ; P signifiant potassium) ⁽⁴⁾ Référence Lipaton^{®} SB 29Y46 commercialisé par la société Synthomer (latex) ⁽⁵⁾ Référence Betolin^{®} AH250 commercialisé par la société Woellner n.d. : non déterminé | | | | | | | |

**Tableau 2**

| Exemple | 7 | 8 | 9 | 10 | 11 (comp.) | 12 (comp.) | 13 (comp.) | 14 | Réf. |
|---|---|---|---|---|---|---|---|---|---|
| - Silicate de potassium⁽¹⁾ | - | - | - | - | - | - | - | 100 | - |
| - Silicate de potassium ⁽²⁾ | 100 | 90 | 80 | 70 | 60 | 50 | 25 | - | - |
| - Copolymère styrène-butadiène⁽⁴⁾ | - | 10 | 20 | 30 | 40 | 50 | 75 | - | - |
| Taux de liant (% en poids) | 47,4 | 48,5 | 47,3 | 47,4 | 47,1 | 47,8 | 44,0 | 47,2 | 45,0 |
| Résistance rupture en traction (N) | 120,4 | 100,0 | 105,9 | 107,4 | 109,2 | 105,6 | 85,5 | 86,7 | 109,0 |

| Distance propagation (mm) | | | | | | | | | |
|---|---|---|---|---|---|---|---|---|---|
| Tranche | 15 | 40 | n.d. | 80 | Totale | Totale | n.d. | 20 | Totale |
| Surface | 30 | 50 | n.d. | 70 | Totale | Totale | n.d. | 30 | n.d. |

| Temps propagation à 15 cm (s) | | | | | | | | | |
|---|---|---|---|---|---|---|---|---|---|
| Tranche | p.d.p. | p.d.p. | n.d. | p.d.p. | 6 | 6 | n.d. | p.d.p. | 3 |
| Surface | p.d.p. | p.d.p. | n.d. | p.d.p. | 10 | 9 | n.d. | p.d.p. | n.d. |

| | | | | | | | | | |
|---|---|---|---|---|---|---|---|---|---|
| ⁽¹⁾ Référence Betol^{®} K42T commercialisé par la société Woellner (rapport massique Si/P = 1,9 ; P signifiant potassium) ⁽²⁾ Référence Betol^{®} K5020T commercialisé par la société Woellner (rapport massique Si/P = 1,6 ; P signifiant potassium) ⁽⁴⁾ Référence Lipaton^{®} SB 29Y46 commercialisé par la société Synthomer (latex) n.d. : non déterminé p.d.p. : pas de propagation de la flamme | | | | | | | | | |

**Tableau 3**

| Exemple | | 15 | 16 | 17 | Référence |
|---|---|---|---|---|---|
| - Silicate de potassium⁽²⁾ | | 100 | 75 | 75 | - |
| - Copolymère styrène-butadiène⁽⁴⁾ | | - | 25 | 24 | - |
| - Agent de couplage⁽⁶⁾ | | - | - | 1 | - |
| Résistance rupture en traction (N) | | 202,7 | 219,4 | 542,1 | 465,4 |
| Rigidité (mN) | | 58,4 | 59,5 | 90,1 | 64,8 |
| Distance de propagation (mm) | | | | | |
| | Tranche | 30 | 50 | n.d. | Totale |
| | Surface | 30 | 60 | n.d. | Totale |
| Temps de propagation à 15 cm (s) | | | | | |
| | Tranche | p.d.p. | p.d.p | n.d. | 9 |
| | Surface | p.d.p. | p.d.p | n.d. | 18 |

| | | | | | |
|---|---|---|---|---|---|
| ⁽²⁾ Référence Betol^{®} K5020T commercialisé par la société Woellner (rapport massique Si/P = 1,6 ; P signifiant potassium) ⁽⁴⁾ Référence Lipaton^{®} SB 29Y46 commercialisé par la société Synthomer (latex) ⁽⁶⁾ Référence Si69 commercialisé par la société Evonick Industries AG n.d. non déterminé p.d.p. : pas de propagation de la flamme | | | | | |

## Revendications

1. Composition aqueuse de liant inorganique ou hybride, **caractérisée en ce qu'**elle comprend (en % en poids des matières solides)
- 55 à 100 % d'au moins un silicate de métal alcalin présentant un rapport massique Si/métal alcalin qui varie de 0,3 à 2,
- 0 à 35 % d'au moins un agent plastifiant choisi dans le groupe constitué par les copolymères de styrène et de butadiène, les homopolymères et les copolymères de (meth)acrylate d'alkyle, les copolymères de (meth)acrylate d'alkyle et de styrène, les copolymères d'acide (meth)acrylique et de styrène, les poly(acétate de vinyle), les silicones tels que les poly(diméthylsiloxane) et les siliconates, de préférence les siliconates de potassium, en particulier le méthylsiliconate de potassium, et
- **0 à** 10 % d'un ou plusieurs additifs.

2. Composition selon la revendication 1, **caractérisée en ce que le** silicate de métal alcalin est un silicate de potassium ou de sodium, de préférence de potassium.

3. Composition selon la revendication 1 ou 2, **caractérisée en ce que** le silicate de métal alcalin possède un rapport massique Si/métal alcalin supérieur à 0,5 et avantageusement qui varie de 1,2 à 1,6.

4. Composition selon l'une des revendications 1 à 3, **caractérisée en ce que** l'agent plastifiant a une température de transition vitreuse inférieure à 0°C.

5. Composition selon l'une des revendications 1 à 4, **caractérisée en ce que** la proportion d'agent plastifiant est au plus égale à 25 %.

6. Composition selon l'une des revendications 1 à **5, caractérisée en ce que** l'agent plastifiant est un polydiméthylsiloxane et **en ce que** sa teneur est au **plus** égale à 2 %.

7. Composition selon l'une des revendications 1 à 6, **caractérisée en ce que** l'additif est le tétrasulfure de bis(3-triethoxysilylpropyle).

8. Produit fibreux revêtu d'une composition de liant selon l'une des **revendications** 1 à 7.

9. Produit selon la revendication 8, **caractérisé en ce qu'il** se présente sous la forme d'un mat, d'une grille, d'un tissu ou d'un tricot.

10. Produit selon la revendication 9, **caractérisé en ce qu'il** s'agit d'un mat de fibres minérales, en particulier de verre.

11. Produit selon la revendication 10, **caractérisé en ce que** les fibres présentent une longueur au plus égale à 150 mm, de préférence qui varie de 20 à 100 mm et avantageusement de 50 à 70 mm.

12. Produit selon la revendication 10 ou 11, **caractérisé en ce qu'il** présente une masse surfacique qui varie de 10 à 1100 g/m², de préférence de 30 à 350 g/m², et avantageusement de 35 à 80 g/m².

13. Produit selon la revendication 9, **caractérisé en ce qu'il** s'agit d'un tissu se présentant sous la forme d'une toile à peindre comprenant des fils de verre constitués d'une pluralité de filaments de verre revêtus d'une composition d'ensimage organique.

14. Produit selon la revendication 13, **caractérisé en ce que** les fils de verre présentent une masse linéique qui varie de 50 à 500 tex et **en ce qu'**il présente une masse surfacique qui varie de 30 à 1000 g/m².

15. Produit selon l'une des revendications 9 à 14, **caractérisé en ce qu'il** renferme 5 à 50 % en poids de liant inorganique ou hybride, de préférence 10 à 45 %.

## Patentansprüche

1. Wässrige Zusammensetzung aus anorganischem oder hybridem Bindemittel, **dadurch gekennzeichnet, dass** sie umfasst (Feststoffe in Gew.-%):
- zu 55 bis 100 % mindestens ein Alkalimetallsilikat, das ein Si/Alkalimetall-Massenverhältnis aufweist, das von 0,3 bis 2 variiert,
- zu 0 bis 35 % mindestens einen Weichmacher, der aus der Gruppe ausgewählt ist, bestehend aus Styrol- und Butadien-Copolymeren, Alkyl(meth)acrylat-Homopolymeren und -Copolymeren , Alkyl(meth)acrylat- und Styrol-Copolymeren, (Meth)acrylsäure- und Styrol-Copolymeren, Poly(vinylacetat), Silikonen wie Poly(dimethylsiloxan) und Silikonaten, vorzugsweise Kaliumsilikonaten, insbesondere Kaliummethylsilikonat, und
- zu 0 bis 10 % ein oder mehrere Additive.

2. Zusammensetzung nach Anspruch 1, **dadurch gekennzeichnet, dass** Alkalimetallsilikat ein Silikat aus Kalium oder Natrium, vorzugsweise Kalium, ist.

3. Zusammensetzung nach Anspruch 1 oder 2,
**dadurch gekennzeichnet, dass** Alkalimetallsilikat ein Si/Alkalimetall-Massenverhältnis von höher als 0,5 besitzt und das vorteilhafterweise von 1,2 bis 1,6 variiert.

4. Zusammensetzung nach einem der Ansprüche 1 bis 3,
**dadurch gekennzeichnet, dass** der Weichmacher eine Glasübergangstemperatur von weniger als 0 °C vorweist.

5. Zusammensetzung nach einem der Ansprüche 1 bis 4,
**dadurch gekennzeichnet, dass** der Anteil des Weichmachers höchstens gleich 25 % beträgt.

6. Zusammensetzung nach einem der Ansprüche 1 bis 5,
**dadurch gekennzeichnet, dass** der Weichmacher ein Polydimethylsiloxan ist und **dass** sein Gehalt höchstens gleich 2 % beträgt.

7. Zusammensetzung nach einem der Ansprüche 1 bis 6,
**dadurch gekennzeichnet, dass** das Additiv Bis(3-triethoxysilylpropyl)tetrasulfid ist.

8. Faserprodukt, das mit einer Bindemittelzusammensetzung nach einem der Ansprüche 1 bis 7 beschichtet ist.

9. Produkt nach Anspruch 8, **dadurch gekennzeichnet, dass** es in Form einer Matte, eines Rasters, eines Gewebes oder Gestricks vorliegt.

10. Produkt nach Anspruch 9, **dadurch gekennzeichnet, dass** es sich um eine Matte aus Mineralfasern, insbesondere Glas, handelt.

11. Produkt nach Anspruch 10, **dadurch gekennzeichnet, dass** die Fasern eine Länge von höchstens gleich 150 mm, die vorzugsweise von 20 bis 100 mm und vorteilhafterweise von 50 bis 70 mm variiert, aufweisen.

12. Produkt nach einem der Ansprüche 10 oder 11,
**dadurch gekennzeichnet, dass** es eine flächenbezogene Masse, die von 10 bis 1.100 g/m², vorzugsweise von 30 bis 350 g/m² und vorteilhafterweise von 35 bis 80 g/m² variiert, aufweist.

13. Produkt nach Anspruch 9, **dadurch gekennzeichnet, dass** es sich um ein Gewebe in Form einer Malleinwand handelt, umfassend Glasfäden, die aus einer Vielzahl von Glasfilamenten bestehen, die mit einer organischen Schlichtezusammensetzung beschichtet sind.

14. Produkt nach Anspruch 13, **dadurch gekennzeichnet, dass** die Glasfäden eine Feinheit, die von 50 bis 500 tex variiert, aufweist und **dass es** eine flächenbezogene Masse, die von 30 bis 1000 g/m² variiert, aufweist.

15. Produkt nach einem der Ansprüche 9 bis 14,
**dadurch gekennzeichnet, dass** es 5 bis 50 Gew.-%, vorzugsweise 10 bis 45 %, anorganisches oder hybrides Bindemittel beinhaltet.

## Claims

1. An aqueous inorganic or hybrid binder composition, **characterized in that** it comprises (as % by weight of the solid matter):
- from 55 to 100% of at least one alkali metal silicate exhibiting an Si/alkali metal weight ratio which varies from 0.3 to 2,
- from 0 to 35% of at least one plasticizing agent chosen from the group consisting of copolymers of styrene and butadiene, homopolymers and copolymers of alkyl (meth)acrylates, copolymers of alkyl (meth)acrylates and styrene, copolymers of (meth)acrylic acid and styrene, poly(vinyl acetate)s, silicones, such as poly(dimethylsiloxane)s, and siliconates, preferably potassium siliconates, especially potassium methyl siliconate, and
- from 0 to 10% of one or more additives.

2. The composition as claimed in claim 1, **characterized in that** the alkali metal silicate is a potassium or sodium silicate, preferably a potassium silicate.

3. The composition as claimed in claim 1 or 2, **characterized in that** the alkali metal silicate has an Si/alkali metal weight ratio of greater than 0.5 and which advantageously varies from 1.2 to 1.6.

4. The composition as claimed in one of claims 1 to 3, **characterized in that** the plasticizing agent has a glass transition temperature of less than 0°C.

5. The composition as claimed in one of claims 1 to 4, **characterized in that** the proportion of plasticizing agent is at most equal to 25%.

6. The composition as claimed in one of claims 1 to 5, **characterized in that** the plasticizing agent is a polydimethylsiloxane and **in that** its content is at most equal to 2%.

7. The composition as claimed in one of claims 1 to 6, **characterized in that** the additive is bis(3-triethoxysilylpropyl) tetrasulfide.

8. A fibrous product coated with a binder composition as claimed in one of claims 1 to 9.

9. The product as claimed in claim 8, **characterized in that** it is provided in the form of a mat, of a screen, of a woven fabric or of a knitted fabric.

10. The product as claimed in claim 9, **characterized in that** it is a mat of mineral fibers, in particular of glass fibers.

11. The product as claimed in claim 10, **characterized in that** the fibers exhibit a length at most equal to 150 mm, which preferably varies from 20 to 100 mm and advantageously from 50 to 70 mm.

12. The product as claimed in claim 10 or 11, **characterized in that** it exhibits a weight per unit area which varies from 10 to 1100 g/m², preferably from 30 to 350 g/m² and advantageously from 35 to 80 g/m².

13. The product as claimed in claim 9, **characterized in that** it is a woven fabric which is provided in the form of a painter's canvas comprising glass yarns composed of a plurality of glass filaments coated with an organic binding composition.

14. The product as claimed in claim 13, **characterized in that** the glass yarns exhibit a linear density which varies from 50 to 500 tex and **in that** it exhibits a weight per unit area which varies from 30 to 1000 g/m².

15. The product as claimed in one of claims 9 to 14, **characterized in that** it includes from 5 to 50% by weight of inorganic or hybrid binder and preferably from 10 to 45%.
